Europäisches Patentamt

European Patent Office

Office européen des brevets

(11) Publication number: **0 060 693**
A2

# EUROPEAN PATENT APPLICATION

(21) Application number: **82301269.5**

(51) Int. Cl.³: **B 01 D 53/22**

(22) Date of filing: **12.03.82**

(30) Priority: **13.03.81 US 243276**

(43) Date of publication of application: **22.09.82**
**Bulletin 82/38**

(84) Designated Contracting States: **DE FR GB IT NL**

(71) Applicant: **MONSANTO COMPANY, Patent Department 800 North Lindbergh Boulevard, St. Louis, Missouri 63166 (US)**

(72) Inventor: **MacLean, Donald Lewis Gage, 4601 Westavia Drive, Raleigh North Carolina 27612 (US)**

(74) Representative: **McLean, Peter et al, Monsanto House 10-18 Victoria Street, London, SW1H ONQ (GB)**

(54) **Process for separating one gas from a gas mixture.**

(57) A process for separating one gas from a feed gas mixture containing the one gas wherein the mixture is brought into contact with one side of a membrane more permeable to the one gas than the other gases of the mixture and the permeated gas is recovered from the other side of the membrane. In order to maintain the process at a substantially constant rate of recovery at varying feed gas flow rates and/or pressures, the rate of recovery is sensed and the gas mixture is heated or cooled to vary its temperature in proportion to variations in feed gas flow rates and/or pressure such that the rate of recovery remains substantially constant. The rate of recovery may be measured in terms of purity of the permeated gas in the separated gas stream, the amount of gas recovered in a given time period or the percentage of the one gas separated from the feed gas mixture.

EP 0 060 693 A2

ACTORUM AG

-1-


PROCESS FOR SEPARATING ONE GAS FROM A GAS MIXTURE .


BACKGROUND OF THE INVENTION


A. Field of the Invention

This invention relates to methods for separating one gas from a mixture of gases.


B. Prior Art

In certain manufacturing processes there will be found a gas stream made up of a mixture of gases containing unreacted hydrogen as part of the mixture. It is known that this unreacted hydrogen can be separated from certain other gases or a mixture of gases by utilizing a membrane which is more permeable to hydrogen than the other gases of the mixture. The gas mixture is brought into contact with one side of the membrane and permeated hydrogen is recovered from the other side of the membrane. One disadvantage of this known process is that variations in the flow rate or pressure of the gas stream result in variations in the amount of hydrogen recovered from the gas stream. If the gas stream is to be fed to another process, for example, the varying amount of hydrogen remaining in the gas stream may cause upsets in that process. It would be desirable to have a process for recovering hydrogen or other gases from a process stream wherein conditions such as purity of the recovered gas, the percentage of gas removed from the stream or the amount of gas recovered per time remain substantially constant at varying stream flow rates and pressures.

## SUMMARY OF THE INVENTION

A process for separating one gas from a feed gas mixture containing the one gas wherein the mixture is brought into contact with one side of a membrane more permeable to the one gas than the other gases of the mixture and the permeated gas is recovered from the other side of the membrane. The rate of recovery of the one gas is sensed to detect variations therein and is maintained at a substantially constant value, at varying mixture flow rates and pressures, by heating the gas mixture to vary its temperature as the flow rate and/or pressure varies. The rate of recovery may be measured in terms of the purity of the one gas in the permeate gas stream, the amount of gas recovered in a given time or the percentage of the one gas removed from the feed gas mixture.

## DETAILED DESCRIPTION OF THE INVENTION

The process of the present invention is useful where permeable membranes are used for separating one gas from a mixture of that gas and one or more other gases. In carrying out this separation operation, the mixture of gases is brought into contact with the membrane and the more permeable gas will permeate the membrane and be recovered from the other side thereof. A difference in partial pressure of the more permeable gas is maintained across the membrane to act as a driving force for causing one of the gases of the mixture to permeate the membrane.

The membrane may be in the form of a thin sheet but is preferably in the form of hollow filaments. Generally, the hollow filaments are mounted in a bundle in a closed vessel and the mixture of gases is admitted to the vessel to surround the hollow filaments in contact with the outer surfaces thereof. The more permeable gas penetrates the filaments and is withdrawn from the hollow interiors or bores of the filaments.

Factors which have an effect on the amount of gas recovered from the mixture with a given membrane are the permeabilities of the gases involved, the difference in partial pressures of the gases across the membrane, the flow rate of the gas mixture, etc. Unfortunately, the

0060693
36-6276

percentage, purity and/or amount of gas recovered from the mixture varies as the flow rate or pressure of the gas mixture varies, these variations in flow rate and pressure resulting from the nature of certain processes. This problem is solved by the present invention.

It has been found that the rate at which a gas is recovered from a gas mixture can be maintained at an essentially constant value at varying mixture flow characteristics, i.e., flow rates and pressures, by heating the gas mixture prior to its contact with the membrane, as described herein. This heating is done most easily by passing the gas mixture through a heat exchanger. The flow rate and pressure of the gas mixture may be sensed in a conventional manner and the gas heated in such a manner that its temperature changes in proportion to changes in the flow rate and/or pressure of the gas mixture. However, it is preferred to sense the rate of recovery of the permeated gas and to heat the gas mixture sufficiently to keep the rate of recovery at a substantially constant value. Inasmuch as the permeability of the gas varies with temperature, heating the gas in this manner will vary the rate of recovery. The rate of recovery may be measured in terms of the amount of gas permeated in a given time, the percentage of the permeated gas which is removed from the gas mixture or the purity of the permeated gas stream.

In the event that it is desired to measure the rate of recovery in terms of the percentage of the permeated gas which is removed from the feed gas mixture, the feed gas temperature is varied in such a manner that the expression

$$I \qquad\qquad \frac{P/\ell \; \Delta P}{Q}$$

remains substantially constant regardless of changes in flow rate and pressure, $P/\ell$ being the permeability of the gas to be recovered, $\Delta P$ being the partial pressure drop of the more permeable gas across the membrane, and Q being the flow rate of the gas mixture. The value of this constant will be determined by the factors making up this expression as well as membrane area, the gases involved, etc. This invention involves not the selection of a certain value for this expression but the maintaining of that value substantially constant.

If the partial pressure differential across the membrane is substantially constant and the rate of recovery is measured in terms
of the percentage of gas removed from the feed gas mixture, then the
feed gas temperature is varied in accordance with the expression

$$\text{II} \qquad T = \frac{C}{\dfrac{C}{T_o} - \text{Ln}\,\dfrac{Q}{Q_o}}$$

where $T$ is the temperature in $^oK$ to which the gas mixture is heated,
$T_o$ is a predetermined temperature in $^oK$ at which a desired amount or
percentage of the one gas permeates the membrane at a predetermined
flow rate in $M^3$/minute, $Q_o$ is the predetermined flow rate in $M^3$/
minute, $Q$ is the varied flow rate in $M^3$/minute and $C$ is 500 to 3500,
preferably 1400 to 2500. $Q$ and $Q_o$ may be expressed in terms of
measurement other than $M^3$/minute, provided that both are in the same
terms.

In some cases it may be feasible to disregard the more difficult
to measure partial pressure drop across the membrane and simply
measure the difference in total pressure from one side of the membrane
to the other and use this measurement as an approximation of the
partial pressure drop. In most cases the pressure on the permeate
side of the membrane will remain substantially constant, so that
variations in pressure drop across the membrane are the same as the
variations in the pressure of the feed gas mixture. In this case a
simple device can be connected to sense variations in the gas mixture
pressure for determining the temperature to which the gas should be
heated.

There are several factors which will determine the amount or
percentage of gas recovered from a feed gas mixture. These are
among other things, the nature of the membrane, the permeabilities of
the gases making up the mixture, the effective area of the membrane,
gas mixture temperature, pressure and flow rate, etc. If an equation
were drawn to calculate the exact amount or percentage of gas to be
recovered at a given set of conditions, i.e., the recovery rate, all
of these factors would have to be included, including all constants
such as membrane area and other constants found in the mathematical
expression used in determining gas recovery. However, the process of
this invention is not concerned with a specific recovery rate but is concerned with maintaining the rate of recovery at a substantially constant value under varying mixture flow rates and pressures. Thus, for a given installation, all of the constants which are not additive or subtractive, such as membrane area and certain other constants found in the mathematical expression used for calculating specific gas recovery, can be ignored and dropped from the expression to leave only additive or subtractive constants and those variables, such as flow rate, which directly affect the amount or percentage of recovered gas. When this is done, the result is expression I. So long as expression I is kept at a substantially constant value, the percentage of gas removed from the gas mixture will remain at a substantially constant value.

When the pressure differential, $\Delta P$, across the membrane is kept at a constant value, then expression I can be simplified to give the expression

$$\frac{P/\ell}{Q}$$

If this expression is maintained at a constant value, by varying the gas temperature to vary $P/\ell$ with flow rate, $Q$, the percentage of gas removed from the feed gas stream will remain at a substantially constant value. In order to determine specific temperatures to which the gas mixture should be heated when $\Delta P$ is constant, this expression can be written to include temperature, $T$. Since

$$P/\ell = K_o e^{-E/RT}$$

where $K_o$ is a constant and $e^{-E/RT}$ is taken from the Arrhenius equation, then, dropping the constant, $K_o$, and by substitution, we obtain

$$\frac{e^{-E/RT}}{Q} = \text{some constant}$$

or

$$\frac{e^{-E/RT}}{Q} = \frac{e^{-E/RT_o}}{Q_o}$$

where $T_o$ is the original gas mixture temperature in $^{o}K$, $Q_o$ is the

original mixture flow rate, Q is the flow rate to which the gas mixture is varied and T is the temperature, in $^{\circ}$K, to which the gas must be heated to maintain a constant recovery rate. This equation can be written as

$$\frac{-E}{RT} - LnQ = \frac{-E}{RT_o} - LnQ_o$$

which may in turn be written as

$$\frac{-E}{RT} + \frac{E}{RT_o} = LnQ - LnQ_o$$

or

$$\frac{-E}{R} \left(\frac{1}{T} - \frac{1}{T_o}\right) = Ln\frac{Q}{Q_o}$$

For recovery of hydrogen gas using a polysulfone membrane, a preferred embodiment, the value of $-E/R$ will be about 1400 to 2500$^{\circ}$K. For other gases and membranes, the value of $-E/R$ will vary from about 500 to about 3500. By utilizing the letter C to designate $-E/R$ and transposing, the equation may be rewritten as

$$\text{II} \qquad T = \frac{C}{\dfrac{C}{T_o} - Ln\dfrac{Q}{Q_o}}$$

where C is 500 to 3500 and preferably 1400 to 2500, $T_o$ and $Q_o$ are the starting or reference gas temperature and flow rate at which a desired percentage of the one gas is removed from the feed gas stream, Q is the flow rate to which the gas mixture is varied and T is the temperature to which the mixture must be heated to maintain the desired gas recovery rate at the new flow rate. T and $T_o$ are expressed in degrees K. It should be understood that the mathematical expressions set out herein are useful where the rate of recovery is measured in terms of the percentage of the permeated gas removed from the feed gas stream, with these expressions being not quite so accurate when the rate of recovery is measured in terms of purity of permeated gas or amount of gas permeated versus time.

The membranes used are preferably in the form of hollow polysulfone filaments or fibers mounted in a bundle in a tubular shell.
Preferred membranes are the multiple component or coated filaments
made from a polysulfone polymer, as disclosed by Henis, et al.,
in U. S. Patent No. 4,230,463. Preferably, the gas mixture is fed
into the shell to come into contact with the outer surfaces of the
hollow filaments, with the more permeable gas from the gas stream
permeating the walls of the filaments to the bores thereof and being
withdrawn from these bores

The rate at which a given gas permeates the membrane depends
upon, among other things, the particular membrane used. Especially
desirable membranes for use in the process of this invention where
hydrogen is the more permeable gas, exhibit hydrogen permeabilities
of at least about $1 \times 10^{-6}$ and preferably from $1 \times 10^{-5}$ to $5 \times 10^{-4}$
cubic centimeters of hydrogen, at standard temperature and pressure,
per square centimeter of membrane surface area per second at a
pressure differential of 1 centimeter of mercury across the membrane.
The membrane should have a separation factor of at least about 10
for the more permeable gas in preference to at least one other slower
permeating gas in the feed gas mixture. Preferably, the membrane will
have a separation factor of at least about 20 in preference to at
least one other slower permeating gas in the gas mixture. For
example, separation factors for hydrogen over methane and other gases
of 50 or even 100 or greater are provided by certain membranes. The
selectivity or separation factor of a membrane is described in terms
of the ratio of the permeability, $P/\ell$, of the faster permeating gas
to the permeability of a slower permeating gas. Some of the gases
which have significantly slower permeating rates with a given
membrane, compared to gases such as hydrogen and hydrogen sulfide,
are methane and other hydrocarbon gases, nitrogen, carbon monoxide,
etc.

The temperature to which the gas mixture is heated is within the
range of 20°C to 80°C and is preferably within the range of 30°C to
60°C. While the invention is disclosed herein primarily in terms of
heating the gas mixture, it should be understood that the term "varying
the gas mixture temperature", as used herein, also includes cooling
the mixture where such is required.

EXAMPLE 1

A permeator made of hollow polysulfone fibers as described in the above-mentioned Henis, et al., patent and having an effective membrane area of 2.79 square meters was used to recover hydrogen from a feed gas mixture of 85 percent hydrogen and 15 percent methane. The flow rate of the gas mixture varied from about 33 to 65 cubic meters per minute at standard conditions and at a constant pressure. The gas mixture was passed through a heat exchanger prior to contact with the membrane and was heated to temperatures which were varied with variations in the flow rate, in accordance with expression II, in order to achieve a constant 60 percent recovery of the hydrogen in the feed gas mixture. Table 1 below shows the gas temperatures used with each flow rate. $T_o$ was 19°C (292°K) and $Q_o$ was 33.4 $M^3$/minute, with C being 1800.

TABLE 1

| Flow Rate $M^3$/Min. | 33.4 | 41.3 | 48.2 | 57.0 | 64.9 |
|---|---|---|---|---|---|
| Gas Temp. °C | 19 | 30 | 39 | 46 | 54 |

EXAMPLE 2

Example 1 was repeated with the exception that the feed gas mixture was heated to temperatures to achieve a substantially constant 70 percent recovery of the hydrogen from the feed gas. Table 2 shows the gas mixture temperatures used to accomplish this result at varying flow rates. $T_o$ was 19°C (292 °K) and $Q_o$ was 43.2 $M^3$/minute. C was 1500.

TABLE 2

| Flow Rate M$^3$/Min. | 43.2 | 49.2 | 57.0 | 68.8 | 76.7 |
|---|---|---|---|---|---|
| Gas Temp. $^o$C | 19 | 30 | 39 | 46 | 54 |

CLAIMS

1.     A process for recovering one gas from a feed gas made up of
a mixture of said one gas and at least one other gas, said feed
gas mixture having a variable flow characteristic, comprising

      a.   bringing said feed gas mixture into contact with
      one side of a membrane more permeable to said one gas
      than said other gas to allow said one gas to permeate
      to the other side of the membrane, said feed gas being
      under a first pressure,

      b.   recovering said permeated one gas from said other
      side at a second pressure lower than said first pressure,
      and

      c.   varying the temperature of the feed gas mixture
      prior to said contact in response to variations in
      said flow characteristic in such a manner that the
      rate of recovery of said one gas is maintained at a
      substantially constant value.

2.     A process of Claim 1, wherein the rate of recovery is sensed
and the feed gas mixture temperature is varied in response to sensed
variations in said rate of recovery to maintain said rate of
recovery at a substantially constant value.

3.     A process of Claim 1, wherein said flow characteristic is
sensed and said gas mixture temperature is varied in response to
sensed variations in said flow characteristics.

4.     A process of Claim 3, wherein the membrane is in the form of
a plurality of hollow filaments.

5.     A process of Claim 4, wherein the flow characteristic sensed
is the flow rate of the gas mixture.

6.     A process of Claim 5, wherein the said one gas is hydrogen
and the filaments are made from a polysulfone polymer and have a
separation factor of at least 10 for hydrogen over said other gas
and a hydrogen permeability of at least about $1 \times 10^{-6}$ cubic
centimeters of hydrogen per square centimeter of filament
surface per second at a pressure of 1 centimeter of mercury
across said membrane.

7.    A process of Claim 6, wherein the gas mixture temperature
is varied within the range of $5^{\circ}$C. to $90^{\circ}$C.

8.    A process of Claim 7, wherein the gas mixture temperature
is varied to a temperature within the range of $30^{\circ}$C. to $60^{\circ}$C.

9.    A process of Claim 4, wherein the flow characteristic sensed
is the pressure of the gas mixture.

10.    A process of Claim 2, wherein the said rate of recovery is in
terms of purity of said permeated one gas.

11.    A process of Claim 2, wherein said rate of recovery is in terms
of the amount of said one gas permeated versus time.

12.    A process of Claim 2, wherein said rate of recovery is in terms
of the  percentage of said one gas removed from said gas mixture.

13.    A process of Claim 12, wherein the temperature of the feed gas
mixture is varied to vary the permeability of said one gas in such a
manner that the expression

$$\frac{P/\ell\ \Delta P}{Q}$$

remains substantially constant, where $P/\ell$ is said permeability of said
one gas, $\Delta P$ is the difference in partial pressure of said one gas across
the membrane and Q is the flow rate of said feed gas mixture.

14.    A process of Claim 12, wherein the temperature of the feed gas
mixture is varied in accordance with the expression

$$T = \frac{C}{\dfrac{C}{T_o} - \text{Ln}\ \dfrac{Q}{Q_o}}$$

where T is the temperature in $^{\circ}$K to which the feed gas mixture is
heated, $T_o$ is a predetermined temperature in $^{\circ}$K at which a desired
percentage of said  one gas is recovered from the feed gas mixture
at a predetermined flow rate, $Q_o$ is said predetermined flow rate in
cubic meters per minute, Q is the flow rate in cubic meters per
minute to which the feed gas mixture is varied, and C is a constant
having the value of 500 to 3500.

15.    A process of Claim 14, wherein C is within the range of 1400
to 2500.